# EUROPEAN PATENT SPECIFICATION

(11) **EP 2 439 061 B1**
(45) Date of publication and mention of the grant of the patent: **04.01.2017**
(21) Application number: 10783269.3
(22) Date of filing: 20.05.2010
(51) Int. Cl.: B29D 30/24, B29D 30/26

(54) **TIRE BUILDING DRUM AND DEVICE AND METHOD FOR PRODUCTION OF UNVULCANIZED TIRES**
REIFENBAUTROMMEL SOWIE VORRICHTUNG UND VERFAHREN ZUR HERSTELLUNG VON UNVULKANISIERTEN REIFEN
TAMBOUR DE FABRICATION DE PNEUS, DISPOSITIF ET PROCÉDÉ DE FABRICATION DE PNEUS NON VULCANISÉS

(30) Priority: 01.06.2009 JP 2009132435; 01.06.2009 JP 2009132436
(43) Date of publication of application: 11.04.2012
(73) Proprietor: Bridgestone Corporation, Tokyo 104-8340 (JP)
(72) Inventor: TAKASUGA, Yutaka, Kodaira-shi Tokyo 187-8531 (JP)
(74) Representative: Oxley, Robin John George
(86) International application number: PCT/JP2010/058546
(87) International publication number: WO 2010/140485

(56) References cited:
- WO-A1-2004/012928
- DE-A1- 2 507 726
- JP-A- 2002 028 986
- JP-A- 2005 246 844
- JP-A- 2007 136 935
- JP-B- 46 004 892
- JP-B- 47 019 116
- JP-U- 61 047 620
- US-A- 3 485 692
- US-A- 3 536 566
- US-A- 3 582 435
- US-A- 3 637 450
- US-A- 4 007 081
- US-A- 5 308 437
- US-A1- 2008 017 298

## Description

### Technical Field

The present invention relates to a tire building drum used in the manufacture of unvulcanized tires and capable of expanding and reducing a diameter and a device and a method for production of unvulcanized tires by using this tire building drum.

### Background Art

In a manufacturing process of an unvulcanized tire, various tire building drums such as a belt/tread forming drum which forms a cylindrical member made up of a belt and a tread, a forming drum of a cylindrical carcass band or a transfer drum which transfers a tire constituent member to a body to be formed or the like are used. Furthermore, as a tire building drum, a forming drum in which the diameter of an outer periphery is expanded and reduced in accordance with the size, a peripheral length or the like of an unvulcanized tire or a cylindrical member to be manufactured by displacing a plurality of segments juxtaposed in the drum peripheral direction through the use of a driving mechanism in the drum has been known (See Patent Document 1).

In this type of the tire building drum capable of expansion/reduction of the diameter, since the segments are made up of rigid bodies in general, the radius of curvature of the outer surface cannot be changed, and if the diameter is largely expanded or reduced, the roundness of the outer periphery constituted by the plurality of segments tends to become low. Accordingly, in order to ensure sufficient roundness, each segment is used in a relatively narrow diameter expansion/reduction range and is formed in accordance with the respective diameters. Therefore, the prior-art tire building drum requires replacement of the entirety in accordance with the switched size of a member to be manufactured, for example, or replacement and the use of a mechanical component including the segments at the time of the manufacture of unvulcanized tires. However, such replacement of the entirety or components every time needs a large space for storing the mechanical components or the like for replacement, and effective the use of a space is obstructed. Furthermore, each replacement work requires a lot of manpower and consumes a large quantity of labor or time, and since production is stopped during the replacement or adjustment, productivity is largely lowered and a manufacturing cost of the tire tends to rise, for which improvement is required from the viewpoint of improvement of productivity.

In order to cope with the above, productivity can be considered to be improved by increasing the number of segments and dividing the outer periphery into more parts so as to ensure sufficient roundness for the tire building drum capable of diameter expansion/reduction and to enable use thereof in a wider diameter expansion/reduction range. In this case, by changing the outer periphery of the tire building drum to an arbitrary diameter, the manufacture of arbitrary sizes and many types of members and unvulcanized tires can be handled without requiring replacement of components or the like, and in addition to productivity improvement, one-size-fits-all can be realized by covering the whole manufacturing range by one drum.

However, with the prior-art tire building drum, the segment driving mechanism is subjected to mechanical restriction since the arrangement space thereof is limited to within the drum in general, and the number of displacement mechanisms for each of the segments that can be arranged in the drum peripheral direction is also limited. As a result, the number of segments is also limited to within the number of displacement mechanisms, and thus the number of divisions in the outer periphery cannot be increased (approximately 6 to 12 divisions, for example), and expansion of the practical diameter expansion/reduction range so as to realize wide commoditizing is difficult. Therefore, in order to further improve productivity, a large increase of the segments without complicating the device is in strong demand.

Furthermore, in the forming drum described in Patent Document 1, the plurality of segments juxtaposed in the drum peripheral direction is guided by a guide mechanism in the drum and displaced in the drum radial direction, and the diameter of the outer periphery is expanded and reduced in accordance with the size, peripheral length or the like of the unvulcanized tire or cylindrical member to be manufactured.

However, in this prior-art forming drum, the guide mechanism is a one-step linear guide which guides each segment by displacing one guide member in the drum radial direction and the displacement amount of the segment (diameter expansion/reduction amount) is determined by a length of the guide member to be displaced or distance capable of displacement. Furthermore, the guide mechanism needs to be arranged inside the plurality of segments constituting the drum outer periphery, and a position in the drum radial direction of the segment which has been displaced with the largest amount of diameter reduction and the most reduced diameter of the forming drum (most reduced diameter) are determined in accordance with the length of the guide member. Therefore, in this forming drum, if the guide member is made shorter so as to reduce the most reduced diameter of the forming drum, the diameter expansion/reduction amount of the segment becomes small, and the diameter expansion/reduction range becomes a range on the small diameter side. In contrast, if the guide member is made longer so as to increase the diameter expansion/reduction amount of the segment, the most reduced diameter of the forming drum becomes large, and the diameter expansion/reduction range becomes a range on the large diameter side.

Due to such problem of the guide mechanism, the prior-art forming drum cannot be expanded/reduced in a wide diameter expansion/reduction range from the small diameter to the large diameter, and thus the length of the changeable outer periphery is limited. Therefore, the use of this forming drum is restricted by the guide mechanism, and the entirety needs to be replaced in accordance with the switched size of the member to be manufactured, or mechanical components need to be replaced and used in accordance with each diameter at the time of the manufacture of an unvulcanized tire. Accordingly, this forming drum needs a wide space for storage of the mechanical components or the like for replacement in the same way as the above in view of the guide mechanism, whereby effective use of a space is obstructed. Furthermore, a large quantity of labor and time is consumed at every replacement work and productivity is largely dropped, and thus improvement of productivity is in demand.

In contrast, without providing the tire building drum with a guide mechanism of a segment, for example, a pair of link mechanisms expanding/contracting each segment in synchronization is usable in a wider diameter expansion/reduction range. However, in this case, as compared with the case of being provided with the guide mechanism, the position of the segment expanded/contracted is likely to be easily fluctuated, and in order to stably ensure sufficient accuracy of expansion/contraction, there is room for further improvement.
Attention is drawn to the disclosures of US 3,582,435, DE 2,507,726 and US 3,485,692.

### Prior-art References

### Patent Document

Patent Document 1: Japanese Unexamined Patent Application Publication No. 8-281829

### Disclosure of the Invention

### Problems to be Solved by the Invention

The present invention has been made in view of the above prior-art problems and its first object is to largely increase the number of segments constituting the outer periphery of the tire building drum while suppressing complication of the device, to enable the use of the tire building drum by ensuring sufficient roundness in a wide diameter expansion/reduction range, and to improve productivity of manufacture of unvulcanized tires.

Furthermore, a second object is to enable arrangement of a guide mechanism which guides displacement of the segment in a drum having a diameter smaller than before while ensuring sufficient accuracy of expansion/contraction of the segments constituting the outer periphery of the tire building drum and to enable the use of the tire building drum in a wide diameter expansion/reduction range, to thereby improve productivity of the manufacture of unvulcanized tires.

### Means for Solving the Problems

(1) A tire building drum of the present invention as defined in claim 1, is a tire building drum for use for manufacture of an unvulcanized tire and in which at least a part of the outer periphery is capable of being expanded and reduced in diameter, provided with a plurality of segments sequentially arranged in the drum peripheral direction and capable of being expanded/contracted and segment displacing means for expanding/contracting the plurality of segments, the segment displacing means having a plural-stage type extensible guide to which each segment is mounted and which is formed of a plurality of guide members sequentially connected and capable of extension/contraction in the segment displacement direction so as to guide the segments by the extending/contracting extensible guide and to extend/contract the same.
   The segment displacing means has guide extension/contraction means for extending/contracting the extensible guide by displacing the guide member capable of expansion/contraction of the extensible guide, and for expanding/contracting the segments by expanding/contracting the extensible guide.
   The guide extension/contraction means has a moving body which is movable in the drum axial direction and a link mechanism which connects the moving body and each guide member to be displaced and configured to perform expansion/contraction in accordance with movement of the moving body, to thereby extend/contract each guide member.
(2) A tire building drum as defined in claim 2 is provided as a tire building drum described in the above (1), in which the plurality of guide members has a first guide member whose position in the drum radial direction is fixed, a second guide member connected to the first guide member and capable of displacement in the drum radial direction, and a third guide member connected to the second guide member and capable of displacement in the drum radial direction, and to which the segment is mounted.
(3) A device for production of an unvulcanized tire as defined in claim 3 is provided with the tire building drum described in the above (1) or (2).
(4) A device for production of an unvulcanized tire as defined in claim 4 is provided as the device for production of an unvulcanized tire according to the above (3), for manufacturing an unvulcanized tire by transferring a tire constituent member arranged on the outer periphery of a transfer drum to a body to be formed, in which the transfer drum is the tire building drum, capable of holding the tire constituent member on the outer periphery and expanding/reducing the diameter, provided with measuring means for measuring the length of the tire constituent member held by the transfer drum, in the drum peripheral direction, means for comparing a measured value of the length measured by the measuring means and a target value of the length set in advance, and means for adjusting the length of the tire constituent member held by the transfer drum by expanding or reducing the diameter of the transfer drum based on the comparison result of the lengths.
(5) A method for production of an unvulcanized tire as defined in claim 5 is provided as a method for production of an unvulcanized tire by using the tire building drum described in the above (1) or (2), comprising the step of expanding or reducing the diameter of the tire building drum by expanding or reducing in diameter the plurality of segments.
(6) A method for production of an unvulcanized tire as defined in claim 6 is provided as a method for production of an unvulcanized tire by transferring the tire constituent member arranged on the outer periphery of the transfer drum to the body to be formed, in which the transfer drum is the tire building drum described in the above (1) or (2), comprising the steps of holding the tire constituent member on the outer periphery of the transfer drum, measuring the length of the tire constituent member held by the transfer drum in the drum peripheral direction, comparing the measured value of the length and the target value of the length set in advance, and adjusting the length of the tire constituent member held by the transfer drum by expanding or reducing the diameter of the transfer drum based on the comparison result of the lengths.

### Advantages of the Invention

According to the present invention, the number of segments constituting the outer periphery of the tire building drum can be largely increased while complication of the device is suppressed, the tire building drum is made usable while sufficient roundness is ensured in a wide diameter expansion/reduction range, and productivity of manufacture of an unvulcanized tire can be improved.

Furthermore, while accuracy of expansion/contraction of the segments constituting the outer periphery of the tire building drum is sufficiently ensured, the guide mechanism which guides displacement of the segments can be made capable of being arranged within a drum having a diameter smaller than before and the tire building drum can be made usable in a wide diameter expansion/reduction range, whereby productivity of manufacture of an unvulcanized tire can be improved.

### Brief Description of the Drawings

[Fig. 1] Figs. 1 are sectional diagrams of an essential part schematically illustrating a tire building drum of a first embodiment, which is not according to the present invention.
[Fig. 2] Fig. 2 is a side diagram extracting and illustrating a plurality of segments from the tire building drum of the first embodiment.
[Fig. 3] Figs. 3 are plan diagrams illustrating a plurality of outer peripheral members of the segments of the first embodiment.
[Fig. 4] Figs. 4 are schematic diagrams illustrating an outline configuration of a device for production of an unvulcanized tire.
[Fig. 5] Fig. 5 is a side diagram schematically illustrating the tire building drum which holds a tire constituent member on the outer periphery.
[Fig. 6] Fig. 6 is a flowchart illustrating transfer procedures of the tire constituent member by the tire building drum.
[Fig. 7] Figs. 7 are sectional diagrams of an essential part schematically illustrating a tire building drum of a second embodiment, which is according to the present invention.
[Fig. 8] Figs. 8 are partially enlarged diagrams illustrating the vicinity of an extensible guide on one side of the tire building drum illustrated in Figs. 7.
[Fig. 9] Figs. 9 are front diagrams extracting and schematically illustrating a guide member of the extensible guide.
[Fig. 10] fig. 10 is a plan diagram illustrating the vicinity of a connecting piece of a second guide member in an enlarged manner.
[Fig. 11] Fig. 11 is a side diagram extracting and illustrating a plurality of segments from the tire building drum of the second embodiment.
[Fig. 12] Fig. 12 is a plan diagram illustrating a plurality of outer peripheral members of the segments of the second embodiment.

### Best Modes for Carrying Out the Invention

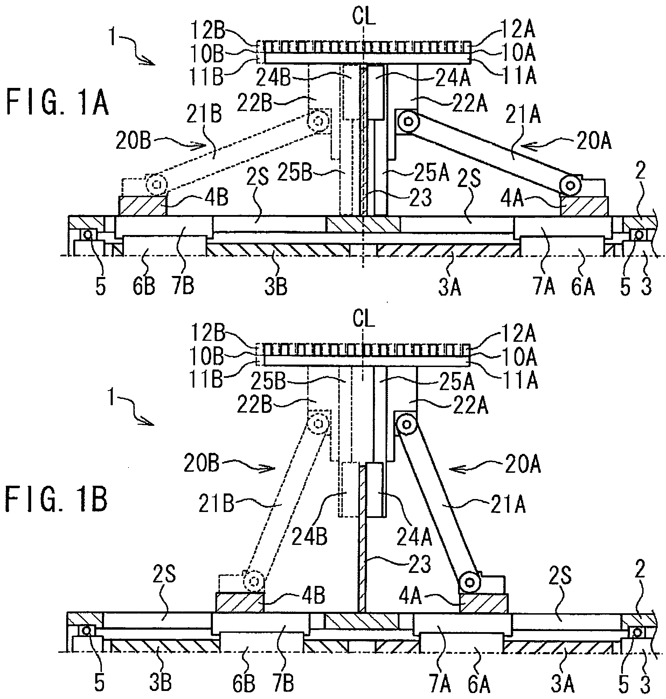

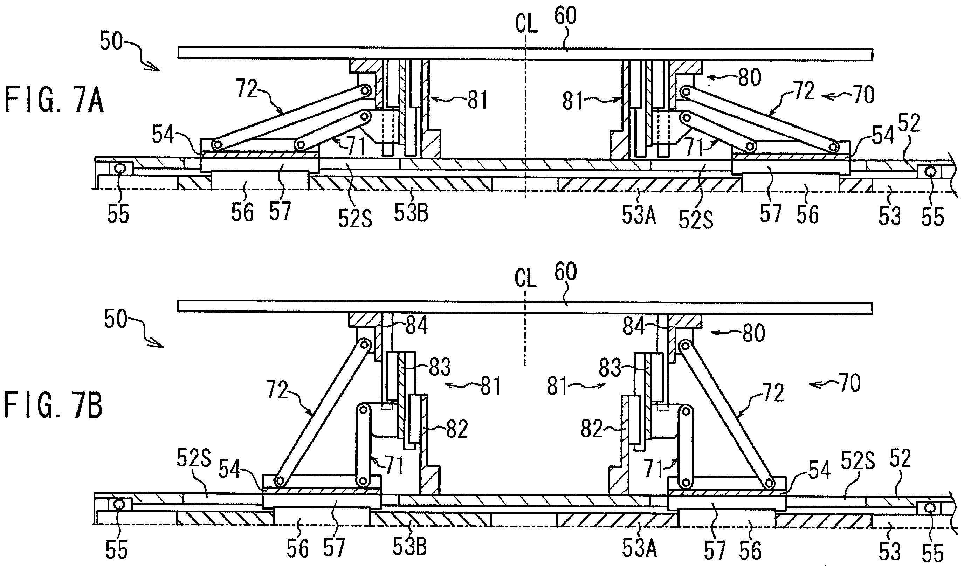

An embodiment of a tire building drum (hereinafter referred simply as a drum) of the present invention will be described below by referring to Figs. 7 to 12 of the attached drawings. The embodiment shown in Figs. 1 to 6 is not according to the present invention.

The drum is a device which is expanded and reduced in diameter at least in a part of the outer periphery in a predetermined diameter expansion/reduction range and is used in a manufacturing process of an unvulcanized tire (a forming process of an unvulcanized tire, for example) and used for manufacture of an unvulcanized tire by being provided in a device for production of an unvulcanized tire. In the following first embodiment, first, an example in which this drum is applied to a belt/tread forming drum which forms a cylindrical member made up of a belt and a tread will be described.

Fig. 1 is a sectional diagram of an essential part schematically illustrating the drum in the first embodiment and illustrates an upper half above the drum axis by cutting it out on a plane including the drum axis.

Fig. 1A illustrates a state in which the diameter of a drum 1 is reduced, and Fig. 1B illustrates a state in which the diameter of the drum 1 is expanded. Furthermore, the drum 1 has a driving device (not shown) connected on the right side, and each element which will be described below operates in synchronization and symmetrically by sandwiching a drum center plane CL in the drum axial direction (horizontal direction in Fig. 1) between them except a part of them.

The drum 1 is provided with, as illustrated, a cylindrical drum main shaft 2, a screw shaft 3 provided in a hollow part in the drum main shaft 2, and a pair of sliders 4A and 4B capable of moving in the drum axial direction on the drum main shaft 2 so as to move to or away from each other. Furthermore, the drum 1 has a plurality of segments 10A and 10B capable of expansion/contraction by moving in the drum radial direction (vertical direction in Fig. 1), and they are arranged cylindrically and concentrically surrounding the drum main shaft 2 while they are adjoined to each other in the order in the drum peripheral direction. Here, the segments 10A and 10B adjacent in the drum peripheral direction are juxtaposed in a state in which they are alternately shifted oppositely in the drum axial direction. In Fig. 1, in order to discriminate the segments 10A and 10B from each other, the segment 10A shifted to one side (right side in Fig. 1) is indicated by a solid line and the segment 10B adjacent thereto on the depth side in the figure and shifted to the other side (left side in Fig. 1) is indicated by a dotted line.

The drum main shaft 2 is formed rotatably around the axis, and one end portion (right end portion in Fig. 1) is connected to the above-described driving device. Furthermore, the drum main shaft 2 is driven by a driving source such as a servo motor provided in the driving device or rotation driving means formed of a transmission mechanism and the like of the rotation power and rotates around the axis at a predetermined speed. In this drum main shaft 2, the rod-shaped screw shaft 3 is supported rotatably in a concentric shape through a bearing 5.

The screw shaft 3 has one end portion connected to the driving device in the same way as the drum main shaft 2 and is rotated and driven in the both directions around the axis independently of the drum main shaft 2 and also stops the independent rotation and is rotated and driven integrally with the drum main shaft 2. Furthermore, the screw shaft 3 forms a ball screw mechanism, in which a pair of male screw portions 3A and 3B whose leads are directed opposite to each other are formed symmetrically with respect to a drum center plane CL, and nuts 6A and 6B meshed with them with a plurality of balls between them are mounted movably in the drum main shaft 2. On the outer peripheries of these nuts 6A and 6B, a plurality of plate-shaped members 7A and 7B is radially fixed, each of which is arranged movably in each slit 2S extending in the drum axial direction of the drum main shaft 2. Moreover, each of the plate-shaped members 7A and 7B penetrates the slit 2S and is mounted on an inner peripheral surface of each of ring-shaped sliders 4A and 4B and connects each of the nuts 6A and 6B to the sliders 4A and 4B. Therefore, the pair of sliders 4A and 4B are moved in the directions opposite to each other through the connected nuts 6A and 6B and the like by means of rotation of the screw shaft 3, slide on the outer peripheral surface of the drum main shaft 2 and move to or away from each other symmetrically with respect to the drum center plane CL. Furthermore, the pair of sliders 4A and 4B is stopped by rotation stop of the screw shaft 3, and the position in the drum axial direction is positioned.

Here, in the first embodiment, the longitudinal direction of the segments 10A and 10B is arranged in parallel with the drum axial direction, and the segments 10A and 10B shifted alternately and oppositely in the drum axial direction are connected only to the sliders 4A and 4B on the shifted sides. That is, regarding the plurality of segments 10A and 10B, the one segment 10A is connected to the one slider 4A in the drum axial direction, and the other segment 10B to the other slider 4B in the drum axial direction, respectively, and they are alternately connected to different sliders 4A and 4B in the drum peripheral direction.

Thus, the drum 1 is provided with, on each side of the drum center plane CL, a plurality of link mechanisms 20A (indicated by a solid line in Fig. 1) which connects the one slider 4A and each segment 10A and a plurality of link mechanisms 20B (indicated by a dotted line in Fig. 1) which connects the other slider 4B and each segment 10B. These link mechanisms 20A and 20B are arranged in accordance with the positions of the connected segments 10A and 10B at positions shifted in the drum peripheral direction only by a half of each arrangement pitch (a half pitch) from each other and also, alternately at predetermined intervals in the drum peripheral direction on the both sides of the drum center plane CL. Furthermore, each of the link mechanisms 20A and 20B has a plurality of links 21A and 21B arranged at equal intervals in the drum peripheral direction and a plurality of support members 22A and 22B mounted on each of the segments 10A and 10B, respectively. These links 21A and 21B have one end portions rotatably mounted on the outer peripheries of the sliders 4A and 4B and extending radially with inclination toward the drum center plane CL and the other end portions outside in the drum radial direction rotatably mounted on each of the support members 22A and 22B.

Regarding the link mechanisms 20A and 20B, the links 21A and 21B are rotated in synchronization with each other by approach (See Fig. 1B) and separation (See Fig. 1A) of the sliders 4A and 4B, using one end portions on the side of the sliders 4A and 4B as fulcrums while the other end portions thereof are expanded and contracted. With that, the support members 22A and 22B are radially displaced in synchronization with each other, inwardly and outwardly in the drum radial direction along each side surface of the disk-shaped flange 23 in conjunction with expansion/contraction of the links 21A and 21B. This flange 23 is arranged on the drum center plane CL and concentrically fixed on the outer peripheral surface of the drum main shaft 2 and has a plurality of guide members 24A and 24B which guide displacement of the opposing support members 22A and 22B on both side surfaces in the drum axial direction.

In contrast, on the support members 22A and 22B, slide rails 25A and 25B are fixed on the flange 23 side in the drum radial direction, and each of the slide rails 25A and 25B is inserted into an engagement groove (a T-groove, for example) (not shown) formed on the guide members 24A and 24B and slidably engaged therewith. The link mechanisms 20A and 20B make the slide rails 25A and 25B to slide in the engagement grooves, and guide the support members 22A and 22B which displace as above by the guide members 24A and 24B. Furthermore, by means of the displacing support members 22A and 22B, the plurality of segments 10A and 10B is displaced in synchronization in both directions in the drum radial direction.

As described above, the drum 1 has the pair of moving bodies, each being formed of the nuts 6A and 6B, the sliders 4A and 4B and the like, which move to or away from each other in synchronization in the drum axial direction and the plurality of link mechanisms 20A and 20B, by which a pair of segment displacing means (displacement mechanisms) are constituted. Furthermore, by means of the plurality of link mechanisms 20A and 20B, each of the moving bodies and the segments 10A and 10B displaced, respectively, are connected so as to constitute a link mechanism, and the links 21A and 21B are expanded and contracted in accordance with movement of the moving bodies so as to expand/contract the segments 10A and 10B. At this time, here, the pair of segment displacing means are alternately connected to the segments 10A and 10B in the drum peripheral direction, and each of the connected segments 10A and 10B is displaced in the drum radial direction so as to expand/contract the plurality of segments 10A and 10B in synchronization.

That is, in the drum 1, the pair of segment displacing means are arranged at symmetrically with respect to the drum center plane CL positions by separating them in the drum axial direction, and the segments 10A and 10B arranged every other positions in the drum peripheral direction, respectively, are connected. As a result, one of the pair of segment displacing means is connected to the one segment 10A arranged every other positions and the other to the other segment 10B arranged between the one segments 10A. Each of these segment displacing means is driven by the driving means formed of the above-described driving device, the screw shaft 3 or the like in synchronization, and the plurality of segments 10A and 10B different from each other, are displaced, respectively, by the pair of segment displacing means. At this time, the pair of segment displacing means expand/contract the drum 1 by displacing the connected segments 10A and 10B in the diameter expanding/reducing directions, respectively. As a result, the drum 1 has the diameter of the outer periphery thereof expanded (See Fig. 1B) and reduced (See Fig. 1A), and the plurality of segments 10A and 10B are stopped at arbitrary positions in the displaceable (capable of diameter expansion/reduction) range so that the outer periphery is set to a predetermined diameter. In that state, the drum 1 rotates without expanding/reducing the diameter but maintaining a certain diameter by rotating the drum main shaft 2 and the screw shaft 3 integrally.

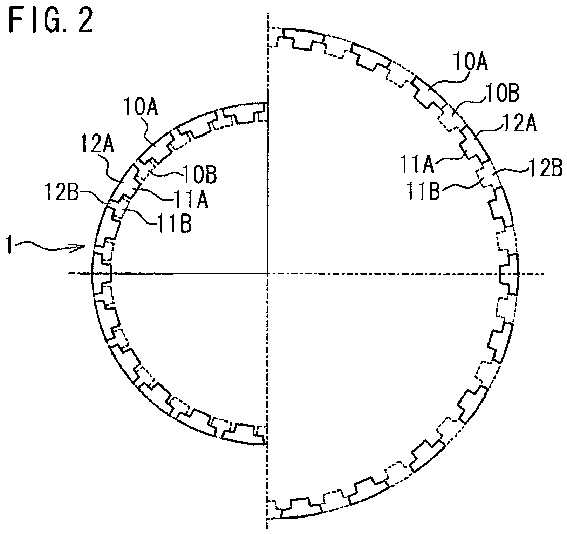

Fig. 2 is a side diagram seen from the drum axial direction, extracting the plurality of segments 10A and 10B from this drum 1 and schematically illustrating them. Furthermore, in Fig. 2, a state in which the diameter of the drum 1 corresponding to Fig. 1A is reduced is illustrated on the left side and a state in which the diameter of the drum 1 corresponding to Fig. 1B is expanded on the right side with the center line between the right and left. In Fig. 2, the plurality of segments 10A and 10B is illustrated alternately by a solid line and a dotted line in the same way as Fig. 1, respectively, but they are different from each other only in the positions in the drum axial direction and configured similarly.

The plurality of segments 10A and 10B is, as illustrated, juxtaposed at equal intervals in the drum peripheral direction and arranged cylindrically on the whole so as to constitute the drum outer peripheral surface and also arranged at arbitrary positions between the predetermined expanded diameter position (right side in Fig. 2) and the reduced diameter position (left side in Fig. 2). Here, the plurality of segments 10A and 10B has the diameter expansion amount and the diameter reduction amount (displacement amount) adjusted by rotation and stop of the screw shaft 3 in an analog way with no step, and the outer diameter and the length of the outer periphery (length in the drum peripheral direction) are set to predetermined values. Furthermore, here, the segments 10A and 10B shifted to the right and left in the drum axial direction are arranged in 22 pieces each, and thus, 44 pieces of the segments 10A and 10B in total are sequentially arranged in the drum peripheral direction so as to constitute the drum outer periphery. As described above, by increasing the number of the segments 10A and 10B and by finely dividing the outer peripheral surface of the drum 1 in the tire peripheral direction, sufficient roundness of the outer periphery is ensured over the whole diameter expansion/reduction range so that the outer periphery of the drum 1 forms a shape close to a circle at each outer diameter.

In the first embodiment, each of these segments 10A and 10B is formed by rectangular rod-shaped base portions 11A and 11B mounted on the support members 22A and 22B (See Fig. 1), respectively, and a plurality of separation-type outer peripheral members 12A and 12B provided at an interval from each other on the outer side surface in the drum radial direction. These plural outer peripheral members 12A and 12B are rectangular block-shaped members which constitute the outer peripheral surface of the drum 1 by being combined with each other and arranged in parallel with each other and at equal intervals at a predetermined pitch in the longitudinal direction of the base portions 11A and 11B and separated in the drum width direction (axial direction). Furthermore, the outer peripheral members 12A and 12B project from the both sides of the base portions 11A and 11B in the drum peripheral direction, wherein the longitudinal direction of the outer peripheral members 12A and 12B(See Fig. 2) is directed to the drum peripheral direction perpendicular to the longitudinal direction of the base portion 11A and 11B. Moreover, the outer peripheral members 12A and 12B have the outer side surfaces in the drum radial direction formed with a curve having a predetermined radius of curvature in compliance with the outer peripheral surface of the drum 1 having a predetermined diameter. The entire shape of each of the segments 10A and 10B is formed in a pectinated shape by the plurality of outer peripheral members 12A and 12B and the base portions 11A and 11B. Furthermore, the segments 10A and 10B adjacent in the drum peripheral direction are arranged at positions shifted oppositely in the drum width direction only by a half of the arrangement pitch (a half pitch) of the plurality of outer peripheral members 12A and 12B and each is displaced relatively only by a portion corresponding to one outer peripheral member 12A or 12B.

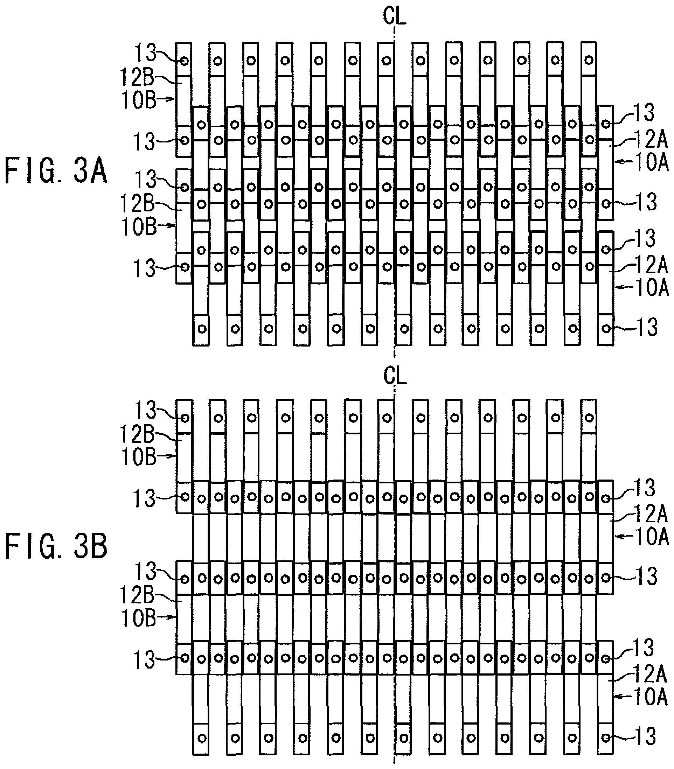

Fig. 3 is a plan diagram illustrating the plurality of outer peripheral members 12A and 12B of these segments 10A and 10B and schematically illustrates the outer peripheral members 12A and 12B of a part of the segments 10A and 10B (four in Fig. 3) when the drum 1 is seen from the outer periphery side (upper side of Fig. 1). Furthermore, Fig. 3A shows a state in which the diameter of the drum 1 is reduced corresponding to the left side in Fig. 1A and Fig. 2, and Fig. 3B shows a state in which the diameter of the drum 1 is expanded corresponding to the right side in Fig. 1B and Fig. 2.

In the plurality of segments 10A and 10B, as illustrated, the plurality of outer peripheral members 12A and 12B of the segments 10A and 10B adjacent in the drum peripheral direction is arranged between the others by shifting the positions in the drum width direction and alternately arranged in the drum width direction. As described above, the plurality of segments 10A and 10B is relatively and sequentially displaced oppositely in the drum width direction, and is alternately arranged sequentially along the drum peripheral direction so as to fill the gap between each of the outer peripheral members and to mesh therewith. Furthermore, the interval between each of segments 10A and 10B in the drum peripheral direction is continuously changed with diameter expansion and diameter reduction and by means of the diameter expansion (See Fig. 3B), the density of the outer peripheral members 12A and 12B becomes gradually low and the gap between each of them becomes large. On the contrary, by means of the diameter reduction (See Fig. 3A), the density of the outer peripheral members 12A and 12B becomes gradually high and the gap between them becomes small and the gap is filled.

On each of the segments 10A and 10B, holding means 13 which detachably holds the tire constituent member wound around the outer periphery in forming of an unvulcanized tire may be provided. Here, the holding means 13 is made up of a magnet embedded on the outer peripheral surface side of each of the outer peripheral members 12A and 12B and attracts steel cord provided in the tire constituent member such as a belt by a magnetic force and reliably holds the tire constituent member on the outer peripheral surface of the drum 1. Furthermore, the plurality of segments 10A and 10B is all formed the same including the mounting portions of the support members 22A and 22B (See Fig. 1) and arranged by alternately changing the direction by 180 degrees in the drum peripheral direction and also by shifting each of the outer peripheral members 12A and 12B in the opposite direction by a half pitch. Such configuration can be realized if each of the segments 10A and 10B employs an asymmetrical structure with respect to the drum center plane CL. As described above, by constituting the plurality of segments 10A and 10B by the same segment, the types of components are not increased but simplified and also, application of a multi-division structure of the drum outer peripheral surface is facilitated while complication of assembling of the segments 10A and 10B is avoided.

In the first embodiment, a device for production of a cylindrical tire constituent member, an intermediate body to be formed of an unvulcanized tire or an unvulcanized tire is constituted by this drum 1, the supply means of each tire constituent member, winding means of the tire constituent member and the like. By using the drum 1 provided in this device for production, the diameters of the plurality of segments 10A and 10B are expanded or reduced and displaced as described above, the diameter of the drum 1 is expanded or reduced to a predetermined diameter and the tire constituent member is arranged on the outer periphery thereof and formed cylindrically, for example, and the plurality of members is overlapped or the like to manufacture the intermediate body to be formed or the unvulcanized tire. Here, a belt is wound around the drum 1, a band-shaped tread member is wound around the outer periphery side thereof or a rubber strip is laminated so as to form the tread member, and the cylindrical member made up of the belt and the tread is formed.

As described above, in the drum 1 in the first embodiment, the above-described pair of segments displacing means provided in the inside are alternately connected to each of the segments 10A and 10B in the drum peripheral direction so as to expand/contract and displace the plurality of segments 10A and 10B. Thus, even if the number of the link mechanisms 20A and 20B that can be arranged in the drum peripheral direction is limited, for example, expansion/contraction and displacement of the segments 10A and 10B in the number up to twice the number that the link mechanisms can be arranged are possible. As a result, regardless of limitation on the arrangement space of the segment displacing means or mechanical restriction, the number of the segments 10A and 10B capable of expansion/contraction can be drastically increased and the number of divisions of the drum outer periphery can be increased without unnecessarily complicating the mechanism or structure of the drum 1.

As a result, the ratio of the segments 10A and 10B to the drum outer periphery and the influence on roundness can be made small, and even if the diameter of the drum 1 is largely expanded/reduced, sufficient roundness can be ensured for the drum outer periphery constituted by the plurality of segments 10A and 10B. As a result, the drum 1 can be used by largely expanding/reducing the diameter without replacing mechanical components including the segments 10A and 10B and by expanding/reducing the diameter of the outer periphery of the one drum 1 in accordance with the switched size of a member to be manufactured and the like, various cylindrical members and unvulcanized tires can be manufactured. Furthermore, the mechanical components for replacement work or storage spaces for them are made unnecessary, whereby a space can be effectively used, and moreover, manpower required for replacement or time and labor for that can be reduced and thus, productivity of unvulcanized tires can be drastically improved, and a manufacturing cost of a tire can be reduced.

Therefore, according to the first embodiment, the number of the segments 10A and 10B constituting the outer periphery of the drum 1 can be drastically increased while complication of the device is suppressed, the drum 1 is made usable while sufficient roundness is ensured in a wide diameter expansion/reduction range, and productivity of manufacture of the unvulcanized tire can be improved. Furthermore, by promoting common the use of the drum 1 and by changing the outer periphery thereof to an arbitrary diameter for use, manufacture of members and unvulcanized tires of an arbitrary size and many types can be handled, and one-size-fits-all can be realized by covering the whole manufacture range by the one drum 1 in addition to the productivity improvement.

In addition, in this drum 1, each of the segments 10A and 10B has a plurality of the outer peripheral members 12A and 12B separated in the drum width direction, and the plurality of outer peripheral members 12A and 12B of the segments 10A and 10B adjacent in the drum peripheral direction is arranged between each other by shifting the positions in the drum width direction. Thus, a large gap is not generated on the outer periphery when the diameter of the drum 1 is expanded but is uniformly brought into contact with the tire constituent member and reliably hold the tire constituent member on the outer peripheral surface, whereby an impression is prevented from being left on the inner surface of the cylindrical member or the unvulcanized tire. At the same time, the structure of the segments 10A and 10B is relatively simple and can be easily applied to a multi-division structure while complication of assembling thereof is avoided. Furthermore, the segment displacing means is formed of the above-described pair of moving bodies and the plurality of link mechanisms 20A and 20B, and high accuracy of diameter expansion/reduction of the outer peripheral surface can be obtained by relatively simple structures and mechanisms.

The example of the belt/tread forming drum has been described, but the drum 1 can be also applied to other drums used for manufacture of unvulcanized tires such as a forming drum of a cylindrical carcass band, a forming drum of an unvulcanized tire in which a part of the outer periphery can be expanded in diameter to a shape having a toroidal section and the like. At this time, the other drums may be a drum which expands/contracts not only the whole outer periphery of the drum but only a part such as the center part, an end part and the like. Furthermore, the drum 1 can be also applied to a transfer drum which manufactures an unvulcanized tire by transferring an extensible/contractible tire constituent member constituting an each part of a tire such as an inner liner, a carcass ply, a belt or the like onto the outer surface of a body to be formed. A device for production of an unvulcanized tire in which this drum 1 is used as a transfer drum will be described below.

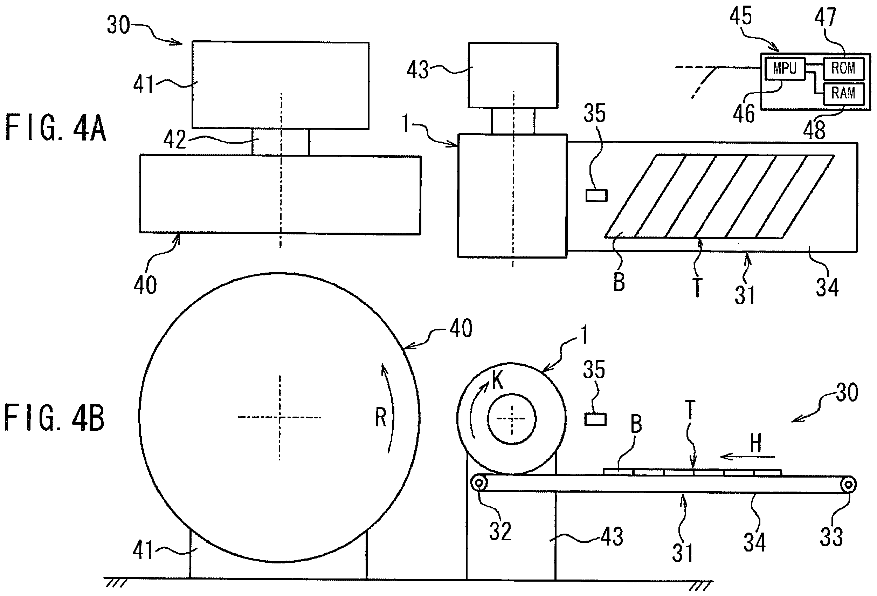

Figs. 4A and 4B are schematic diagrams illustrating an outline configuration of this device for production of an unvulcanized tire (hereinafter referred to as a tire production device), in which Fig. 4A is a plan diagram and Fig. 4B is a side diagram.

A tire production device 30 is provided with, as described in the figure, a conveyer 31 installed horizontally, the drum 1 arranged on one end side of the conveyer 31, and a body to be formed 40 arranged so as to oppose its outer peripheral surfaces to that of the drum 1. The tire production device 30 has the conveyer 31, the drum 1, and the body to be formed 40 arranged linearly in this order and manufactures an unvulcanized tire by transferring a tire constituent member T arranged on the outer periphery of the drum 1 to the body to be formed 40.

The conveyer 31 is conveying means which conveys the tire constituent member T arranged on the upper surface toward the drum 1 (an arrow H in Fig. 4B) and has a pair of rotatable pulleys 32 and 33 and an endless belt 34 extended between them. Furthermore, the conveyer 31 has rotation driving means (not shown) formed of a motor or the like which rotates one of the pulleys 32 and 33, whereby the belt 34 is circulated and driven so as to convey the tire constituent member T on the upper surface in synchronization with rotation of the drum 1 at a predetermined speed.

Here, the tire constituent member T of this embodiment is formed in accordance with the number and the width of the band-shaped member B to a predetermined length shorter than the length of the outer periphery of the drum 1 (peripheral length) by arranging and integrating the plurality (six members in Figs. 4A and 4B) of the band-shaped members B on the conveyer 31. Here, the both end portions of the lengthy band-shaped member B having a predetermined width is diagonally cut off and formed to a predetermined length, and the band-shaped member B is arranged at a predetermined position on the conveyer 31 with inclination in the direction crossing the driving direction of the belt 34 in accordance with the cut-off angle of the both end portions. By sequentially repeating this arrangement and circulation and driving of the belt 34, the plurality of band-shaped members B is joined together with the edge portions in the width direction abutted to each other or overlapped, and the tire constituent member T having a predetermined length is formed on the conveyer 31. The tire constituent member T may be formed from one band-shaped member and arranged on the conveyer 31, in accordance with the type or the body to be formed 40 which is a target of joining, such that the wide band-shaped member is diagonally cut off at the both end portions in the longitudinal direction and formed to a predetermined length or the like.

The body to be formed 40 is an unvulcanized tire in the middle stage of forming or a tire intermediate body made up of a support body (not shown) such as a forming drum, a rigid core or the like and at least one tire constituent member arranged on the periphery thereof, for example, around which the tire constituent member T is wound at a predetermined stage of forming an unvulcanized tire. However, the body to be formed-40 may be constituted only by the rigid core or a forming drum single body having a cylindrical or toroidal-shaped section after bulging deformation, or may be a tire casing obtained by removing a tread from a vulcanized tire, and the constitution is not particularly limited and it is only necessary that a function as a support body for transferring the tire constituent member T is provided. Furthermore, the body to be formed 40 (support body) is mounted on a rotary shaft 42 of a rotation driving device 41, is rotated and driven by a driving source such as a motor or a transmission mechanism of the rotation power thereof and rotated around the axis (an arrow R in Fig. 4B) at a predetermined surface (outer peripheral surface) speed in synchronization with rotation of the drum 1 and is stopped at an arbitrary rotation angle.

The drum 1 is rotatably supported by a driving device 43 constituted in the same way as the above-described rotation driving device 41 and arranged above the one end side of the conveyer 31 with the drum axis in parallel with the axis of the body to be formed 40. Furthermore, the drum 1 has the outer peripheral surface opposed to the outer peripheral surface of the body to be formed 40 with a predetermined distance between them and is arranged in contact with or having a predetermined interval from the upper surface of the belt 34. The driving device 43 travels on a rail (not shown) laid on a floor surface, for example, and the drum 1 is moved between the position on the conveyer 31 and the position where the body to be formed 40 is brought into contact with the outer peripheral surfaces and furthermore, the drum 1 is pressed onto the body to be formed 40 while the pressure is adjusted.

The drum 1 is rotated and driven by this driving device 43 and rotated (an arrow K in Fig. 4B) in compliance with conveyance (an arrow H in Fig. 4B) of the tire constituent member T by the conveyer 31 at the same surface speed as the conveying speed. The drum 1 sandwiches the conveyed tire constituent member T between the outer peripheral surface and the belt 34 while rotating as above and transfers the tire constituent member T from one end side onto the outer periphery in the order by bonding it onto the outer peripheral surface or the like and holds it so as to wind it on the outer periphery. After that, the drum 1 moves to the side of the body to be formed 40 together with the driving device 43 and performs a transfer work of bonding and transferring the tire constituent member T onto the outer peripheral surface of the body to be formed 40. However, the drum 1 is capable of diameter expansion and diameter reduction as described above in a state in which the tire constituent member T is held on the outer periphery and expands or reduces the diameter before transfer to the body to be formed 40 so as to adjust the length of the tire constituent member T having variation in each member to a predetermined length. At this time, in the drum 1, the plurality of segments 10A and 10B has a function as a holding member which is brought into contact with and holds the tire constituent member T, and here, an unvulcanized belt member which becomes a belt layer in a tire, for example, is bonded onto the outer side surface in the drum radial direction of each of the outer peripheral members 12A and 12B, and transfer is accomplished after adjustment of the length.

In addition to the above, the tire production device 30 is provided with a controller 45 which controls the entire device, and the controller 45 executes control such that each part of the device is operated in association at timing or under conditions set in advance and performs each process of manufacture of an unvulcanized tire. The controller 45 is constituted by a computer provided with a microprocessor (MPU) 46, a ROM (Read Only Memory) 47 which stores various programs, and a RAM (Random Access Memory) 48 which temporarily stores data to which the MPU 46 makes a direct access. Furthermore, to the controller 45, each part of the device is connected through connecting means, whereby control signals and various data are transmitted to/received from each part of the device. Moreover, to the controller 45, measuring means 35 which measures the length of the tire constituent member T held by the drum 1 in the drum peripheral direction in contact or in non-contact is connected. The controller 45 executes control of expanding or reducing the diameter of the drum 1 based on the measurement result of this measuring means 35 and of adjusting the length of the tire constituent member T.

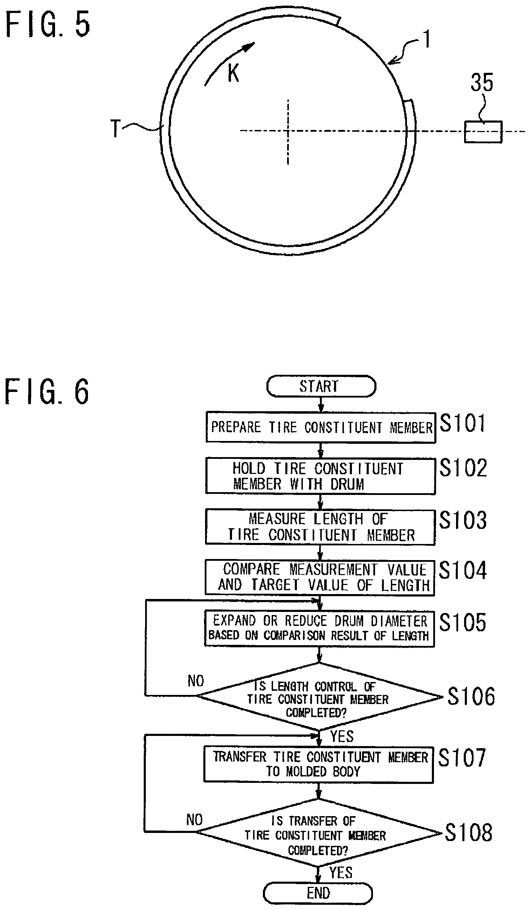

Fig. 5 is a side diagram schematically illustrating the drum 1 which holds the tire constituent member T on the outer periphery and also illustrating the measuring means 35 when seen from the drum axial direction.

The measuring means 35 is a supersonic type distance sensor, for example, and is arranged with the sensor surface directed to the drum axis of the drum 1 as illustrated and opposing the outer peripheral surface of the drum 1 with a predetermined distance between them and also at the center position (drum center surface CL) in the drum width direction. The measuring means 35 measures the distance to the outer peripheral surface of the opposing drum 1 or the tire constituent member T and sequentially outputs the measurement result to the controller 45. The measuring means 35 may be arranged in plural in the drum width direction as necessary in order to make more accurate measurements.

In this tire production device 30, while the drum 1 is rotated (an arrow K in the figure) while maintaining the outer diameter constant, the distance is continuously measured by the measuring means 35, and presence or absence of the tire constituent member T on the outer periphery of the drum 1 is determined from a change in the measured value. Based on the determination result and the measurement condition such as the rotation speed of the drum 1 or the like, the length of the tire constituent member T in the drum peripheral direction on the outer periphery of the drum 1 is measured and obtained by means of calculation by the controller 45. Furthermore, the controller 45 compares the measured value of the length by this measuring means 35 and a target value of the length of the tire constituent member T set in advance and expands or reduces the diameter (See Fig. 2) of the drum 1 only by a predetermined amount according to a difference in the values or the like based on the comparison result of the lengths. As a result, the tire constituent member T held on the outer periphery of the drum 1 (the segments 10A and 10B) is made longer by pulling it in the drum peripheral direction or made shorter by compressing it in the drum peripheral direction. By means of this extension or compression deformation, the length of the tire constituent member T in the drum peripheral direction is changed in accordance with the diameter expansion amount or the diameter reduction amount (a change amount of the outer peripheral length) of the drum 1 and is adjusted so as to become the target value.

As described above, the tire production device 30 deforms the tire constituent member T in the drum peripheral direction and adjusts the length in the drum peripheral direction to a length according to the length in the peripheral direction of the transfer portion (transfer position) of the body to be formed 40 to which the tire constituent member T is to be transferred. Therefore, the diameter of the drum 1 is adjusted to a predetermined outer diameter by expanding to some degree for enabling expansion or reduction thereof, and this predetermined diameter of the drum 1 is maintained, the tire constituent member T is held and bonded on the outer periphery. Furthermore, the target value of the length of the tire constituent member T is determined in accordance with the length of the above-described transfer portion of the body to be formed 40 in the peripheral direction or the like and set in advance in the controller 45. Alternatively, the target value of the length may be determined at every transfer in accordance with a measured value obtained by measuring the peripheral length of the body to be formed 40 to which each tire constituent member T is to be transferred every time and set by the time of comparison.

The tire production device 30 moves the drum 1 to the side of the body to be formed 40 in the standby state together with the driving device 43 (See Figs. 4) after this length adjustment and brings the tire constituent member T held on the outer periphery of the drum 1 into contact with a predetermined portion on the outer peripheral surface of the body to be formed 40. At this time, the tire constituent member T is brought into contact with the body to be formed 40 from the distal end side in the rotation direction of the drum 1 and pressed onto the outer peripheral surface while the position and pressure thereof are adjusted. Subsequently, the body to be formed 40 and the drum 1 are rotated in the directions opposite to each other (arrows R and K in Figs. 4) so that the surface (outer peripheral surface) speed of the body to be formed 40 becomes equal to the surface speed of the tire constituent member T, and the tire constituent member T is bonded from the drum 1 onto the outer peripheral surface of the body to be formed 40 and transferred to the predetermined position. As described above, the tire constituent member T having the predetermined length is transferred to different positions in the peripheral direction of the body to be formed 40 in plural times and arranged over the whole of the peripheral direction so as to form a belt or the like and then, combined with the other tire constituent members or the like and an unvulcanized tire is manufactured (formed).

The diameter expansion/reduction amount of the drum 1 is determined based on the condition set in advance such as a relational expression determined from a relationship between the outer diameter of the drum 1 and the change amount of the outer periphery, for example. Furthermore, depending on the type or thickness of the tire constituent member T, the drum 1 and the body to be formed 40 might be rotated with a difference in speed between them so that a difference is generated in the surface speeds of the tire constituent member T on the drum 1 and the body to be formed 40 during transfer.

Subsequently, by means of this tire production device 30, procedures and operations of manufacture of an unvulcanized tire by using the drum 1 as a transfer drum will be described. However, since an unvulcanized tire is formed with the processes and procedures similar to the prior-art ones before transfer or after transfer of the tire constituent member T by the drum 1, the transfer procedures of the tire constituent member T to the body to be formed 40 will be mainly described here. Furthermore, on the body to be formed 40, an unvulcanized tire during forming, which is a target of transfer of this tire constituent member T, has been already arranged.

Fig. 6 is a flowchart illustrating the transfer procedures of the tire constituent member T by the drum 1.

The tire production device 30 first arranges the tire constituent member T (See Figs. 4 and 4B) on the stopped conveyer 31 for preparation (S101), as illustrated. Subsequently, the conveyer 31 is circulated and driven so as to convey the tire constituent member T to the drum 1 side, while the drum 1 is rotated in synchronization while the outer diameter is maintained at a predetermined diameter, and the tire constituent member T is transferred onto the outer periphery of the drum 1 and maintained (S102).

Subsequently, the length of the tire constituent member T held by the rotating drum 1 in the drum peripheral direction is measured by the measuring means 35 (S103), and the measured value of the length is compared with the target value of the length of the tire constituent member T set in advance (S104). Then, based on the comparison result of the lengths, the diameter of the drum 1 is expanded or reduced by displacing the plurality of segments 10A and 10B (S105), and the length of the tire constituent member T held by the drum 1 is adjusted in compliance with the target value according to the body to be formed 40 to be transferred as described above. As described above, the diameter of the drum 1 is expanded or reduced (S106 - NO) until adjustment of the length of the tire constituent member T is finished, and when the adjustment of the length is finished (S106 - YES), the diameter expansion or reduction of the drum 1 is stopped. At this time, here, the diameter of the drum 1 is expanded or reduced in accordance with the difference between the measured value of the length of the tire constituent member T and the target value thereof, and the tire constituent member T held on the outer periphery is extended or compressed only by a predetermined amount.

Subsequently, the tire constituent member T on the drum 1 is pressed at a predetermined value of pressure onto the outer peripheral surface of the body to be formed 40, and the drum 1 and the body to be formed 40 are rotated in the opposite directions in synchronization, and the tire constituent member T is bonded onto the body to be formed 40 and transferred at a predetermined position (S107). The both rotations are continued until the transfer of the tire constituent member T is finished (S108 - NO), and after the transfer is finished (S108 - YES), the both rotations are stopped, and the drum 1 is moved and separated from the body to be formed 40. As described above, the tire constituent member T arranged on the outer periphery of the drum 1 is transferred onto the outer surface of the body to be formed 40 once or plural times (plural times, here) and an unvulcanized tire is manufactured by overlapping and arranging other tire constituent member or the like. After that, the unvulcanized tire is vulcanized and molded so as to manufacture a tire having a predetermined shape (a pneumatic tire, for example).

As described above, the drum 1 of the first embodiment can also be used as a transfer drum, and the length of the tire constituent member T of many types or various lengths can be adjusted in compliance with a target value before transfer by expanding or reducing the diameter while sufficient roundness is ensured in a wide diameter expansion/reduction range. With that, the length of the tire constituent member T having variation in each member can be adjusted as appropriate, respectively, and the variation in each member can be reduced and dimensional accuracy or arrangement (transfer) accuracy onto the body to be formed 40 can be improved. Furthermore, in this tire production device 30, since the length of various types of the tire constituent member T can be adjusted with the one drum 1 without replacing mechanical components, productivity of the manufacture of unvulcanized tires can be also improved.

Moreover, since the tire constituent member T can be held by the holding means 13 (See Fig. 3) of each of the segments 10A and 10B further reliably, the adjustment work of the length of the tire constituent member T can be performed reliably and accurately. In addition, since the plurality of outer peripheral members 12A and 12B of each of the segments 10A and 10B is arranged between each other, the stress acting on the tire constituent member T from the outer peripheral members 12A and 12B can be finely dispersed. Thus, the tire constituent member T can be uniformly held by the drum 1 over the entirety, and the adjustment of the length can be also made with accuracy by uniformly deforming the entire tire constituent member T.

In this tire production device 30, the tire constituent member T is prepared on the conveyer 31 and then, arranged on the drum 1, but the tire constituent member T may be supplied to and directly arranged on the outer periphery of the drum 1 without using the conveyer 31. Furthermore, here, the drum 1 is formed with a diameter smaller than the body to be formed 40, but the drum 1 may be formed with a diameter larger than the body to be formed 40. In this case, the tire constituent member T may be transferred onto the body to be formed 40 in plural times so as to form a belt or the like, or the tire constituent member T to be transferred may be made longer so that the belt or the like is formed on the body to be formed 40 in one session of transfer.

Subsequently, a drum of a second embodiment will be described. The example in which the drum is applied to a forming drum (band drum) which forms a cylindrical carcass band made up of an inner liner or a carcass ply will be described below.

Figs. 7A and 7B are sectional diagrams of an essential part schematically illustrating the drum of the second embodiment and illustrating the upper half from the drum axis by cutting it out on a plane including the drum axis.

Fig. 7A illustrates a state in which the diameter of a drum 50 is reduced, and Fig. 7B illustrates a state in which the diameter of the drum 50 is expanded. Furthermore, to the right side of the laterally long drum 50, a driving device (not shown) is connected. This drum 50 is constituted symmetrically with respect to the drum center plane CL except a part thereof, and each configuration which will be described below is arranged symmetrically on the both sides of the drum center plane CL and operates symmetrically in synchronization with each other.

The drum 50 is provided with, as illustrated, a drum main shaft 52 rotatable around the axis, a screw shaft 53 provided in a hollow part in the drum main shaft 52, and a pair of sliders 54 capable of moving in the drum axial direction on the drum main shaft 52 so as to move to or away from each other. Furthermore, the drum 50 has a plurality of segments 60 capable of expansion/contraction by moving in the drum radial direction, and they are arranged cylindrically and concentrically surrounding the drum main shaft 52 while they are adjoined to each other in the order in the drum peripheral direction. Moreover, the drum 50 is provided with segment displacing means 70 arranged inside the plurality of segments 60, and the plurality of segments 60 is synchronized by the segment displacing means 70 and expanded/contracted in the drum radial direction so as to expand/reduce the diameter of the outer periphery.

The drum main shaft 52, the screw shaft 53, the sliders 54 of this drum 50 are constituted in the same way as the drum main shaft 2, the screw shaft 3, and the sliders 4A and 4B of the above-described drum 1, respectively. That is, the drum main shaft 52 is driven by the above-described driving device having one end portion connected and rotated around the axis at a predetermined speed. Furthermore, in the drum main shaft 52, the screw shaft 53 is concentrically and rotatably supported through a bearing 55.

The screw shaft 53 has the one end portion connected to the driving device and is rotated and driven independently of the drum main shaft 52, and independent rotation is stopped so as to be rotated and driven integrally with the drum main shaft 52. Furthermore, in the screw shaft 53, male screw portions 53A and 53B are formed symmetrically with respect to the drum center plane CL, and nuts 56 are mounted on them movably in the drum main shaft 52. On the outer periphery of each of the pair of nuts 56, a plurality of plate-shaped members 57 is fixed, and each of them is arranged movably in each slit 52S of the drum main shaft 52. Each plate-shaped member 57 is mounted on the inner peripheral surface of the ring-shaped slider 54 and connects each nut 56 and the slider 54. Therefore, the pair of sliders 54 move in the directions opposite to each other by rotation of the screw shaft 53 through each of the connected nuts 56 and the like, slide on the outer peripheral surface of the drum main shaft 52 and move to or away from each other symmetrically with respect to the drum center plane CL. Moreover, the pair of sliders 54 are stopped by rotation stop of the screw shaft 53 and are positioned in the drum axial direction.

The plurality of segments 60 is arranged with its the longitudinal direction in parallel with the drum axial direction, respectively, connected to both of the pair of sliders 54 by the segment displacing means 70 and guided by the segment displacing means 70 with movement of the sliders 54 and displaced (expanded/contracted) in both directions of the drum radial direction. Thus, the segment displacing means 70 has plural sets of link mechanisms 71 and 72 provided on the pair of sliders 54, respectively, and a guide mechanism 80 which guides displacement of the segments 60. Each of these link mechanisms 71 and 72 is arranged symmetrically at the same positions in the drum peripheral direction in accordance with the position of each of the connected segments 60, respectively, and arranged symmetrically with respect to the drum center plane CL and also arranged at predetermined intervals in the drum peripheral direction. In contrast, the guide mechanism 80 has a plurality of extensible guides 81 in the number according to the number of the segments 60 on the both sides with the drum center plane CL between them and extends/contracts the pair of extensible guides 81 opposing with the drum center plane CL between them so as to guide and to displace each segment 60.

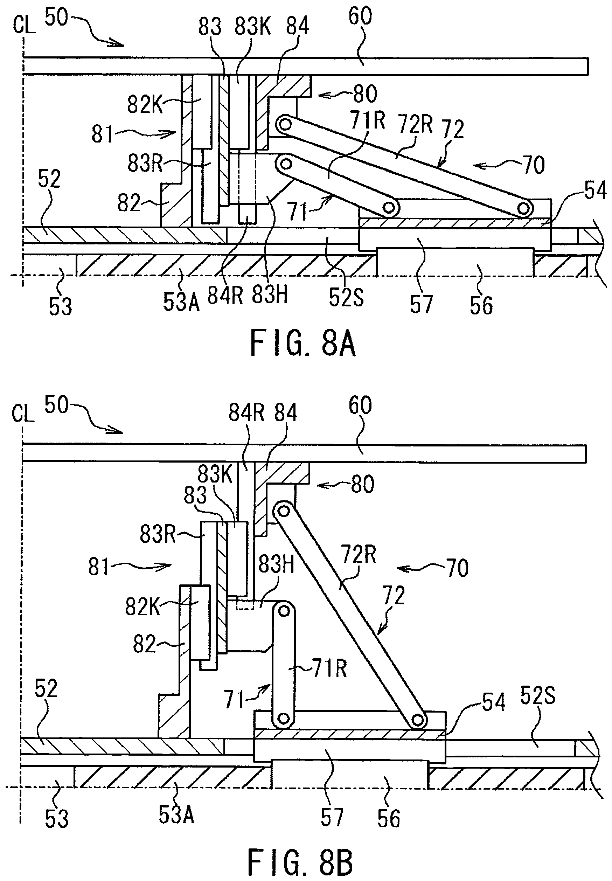

Figs. 8A and 8B are partially enlarged diagrams illustrating the vicinity of the extensible guide 81 on one side of the drum 50 illustrated in Fig. 7.

The extensible guide 81 extends, as illustrated in the figure, from a base end portion fixed to the drum main shaft 52 to the outside in the drum radial direction (upper side in Figs. 8A and 8B), and on the distal end portion thereof, each segment 60 is mounted. Furthermore, the extensible guide 81 has a plural-stage (two-stage, here) extension/contraction mechanism made up of a plurality of (three, here) guide members 82, 83, and 84, and the guide members 82, 83, and 84 are sequentially connected telescopically in the drum radial direction, which is the displacement direction of the segments 60. These guide members 82, 83, and 84 are engaged capable of displacement so that they slide in the drum radial direction and change their positions and expanded and contracted in plural stages in the drum radial direction by sequentially displacing their positions. The segment displacing means 70 constitutes guide means which guides the mounted segment 60 by this extensible guide 81 and guides the segment 60 by the telescopically moving extensible guide 81 and expands/contracts the same by expanding or contracting the plurality of guide members 82, 83, and 84.

Here, the plurality of guide members 82, 83, and 84 has first, second and third guide members 82, 83, and 84 arranged overlapping in the order from inside the drum axial direction to the outside (from the left side to the right side in Figs. 8A and 8B). The first guide member 82 is a disk-shaped flange concentrically fixed to the outer peripheral surface of the drum main shaft 52 and the position in the drum radial direction is fixed and at the same time, functions as a reference guide member (base end member) commonly used for the plurality of extensible guides 81 arranged at predetermined intervals in the drum peripheral direction. Furthermore, on the first guide member 82, an engagement member 82K which is engaged with the opposing second guide member 83 and guides displacement is provided on the side surface on the outside in the drum axial direction.

The second guide member 83 has a rectangular plate shape, a slide rail 83R is fixed on the first guide member 82 side in the drum radial direction, and the slide rail 83R is inserted in an engagement groove (a T-groove, for example) (not shown) formed in the engagement member 82K and slidably engaged. The second guide member 83 is connected to the first guide member 82 capable of displacement in the drum radial direction through this slide rail 83R and the engagement member 82K and is guided by the engagement member 82K in the drum radial direction by means of sliding of the slide rail 83R in the engagement groove during displacement. Furthermore, on the second guide member 83, an engagement member 83K which is engaged with the opposing third guide member 84 and guides displacement is provided on the outside in the drum axial direction.

The third guide member 84 has a block shape, and a slide rail 84R is fixed on the second guide member 83 side in the drum radial direction, and the slide rail 84R is inserted in an engagement groove formed in the engagement member 83K and slidably engaged. The third guide member 84 is connected to the second guide member 83 capable of displacement in the drum radial direction through this slide rail 84R and the engagement member 83K and is guided by the engagement member 83K in the drum radial direction by means of sliding of the slide rail 84R in the engagement groove during displacement. Furthermore, on the third guide member 84, the segments 60 are mounted on the outer end in the drum radial direction.

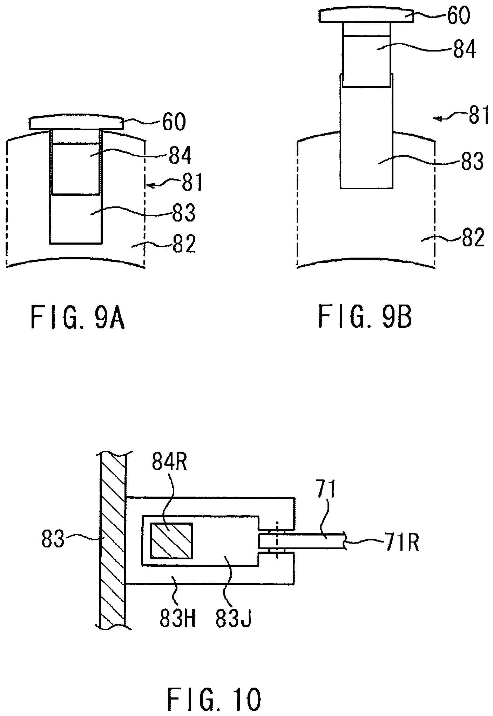

Figs. 9A and 9B are front diagrams extracting and schematically illustrating the three guide members 82, 83, and 84 of the extensible guide 81 and illustrate the extensible guide 81 seen from the right side in Figs. 8A and 8B. Furthermore, Fig. 9A illustrates a state in which the extensible guide 81 corresponding to Fig. 8A is contracted and Fig. 9B illustrates a state in which the extensible guide 81 corresponding to Fig. 8B is extended.

The extensible guide 81 telescopically moves the second guide member 83 with respect to the first guide member 82 and the third guide member 84 with respect to the second guide member 83 by sliding them to the both sides in the drum radial direction, respectively, as illustrated in the figure. As a result, the extensible guide 81 extends/contracts the second and third guide members 83 and 84 by a predetermined distance with respect to the fixed first guide member 82 and guides the segments 60 respectively between the contracted state (See Fig. 9A) and the extended state (See Fig. 9B).

Here, the segment displacing means 70 (See Figs. 8A and 8B) has a guide extension/contraction means which extends/contracts the extensible guide 81 by displacing the guide members 83 and 84 capable of extension/contraction of the extensible guide 81 and expands/contracts the segments 60 by extending/contracting the extensible guide 81. Here, the guide expansion/contraction means is made up of the above-described two link mechanisms 71 and 72, and one end portions of links 71R and 72R provided thereon are rotatably mounted on the second guide member 83 and the third guide member 84, respectively, for displacement. These links 71R and 72R are arranged at the same positions in the drum peripheral direction, and the one longer link 72R extends from the one end portion on the third guide member 84 side to the outside in the drum axial direction (right side in Figs. 8A and 8B) with inclination, and the other end portion is rotatably mounted at a position outside in the drum axial direction of the slider 54. In contrast, the other shorter link 71R extends from one end portion on the second guide member 83 side to the outside in the drum axial direction with inclination and the other end portion is rotatably mounted at a position inside the drum axial direction. Furthermore, the link 71R has one end portion mounted on a connection piece 83H fixed to the second guide member 83 inside the drum radial direction of the one end portion of the link 72R.

Fig. 10 is a plan diagram illustrating the vicinity of a connection piece 83H of the second guide member 83 seen from outside in the drum radial direction in an enlarged manner and a part thereof is illustrated in a section.

The connection piece 83H is, as illustrated in the figure, provided on the second guide member 83, projecting to the outside in the drum axial direction and rotatably supports the link 71R by sandwiching it at a projecting end portion thereof. Furthermore, the connection piece 83H has a through-hole 83J having a rectangular shape on plan view formed and forms a hollow shape, and the slide rail 84R of the third guide member 84 is inserted into the through-hole 83J extending in the drum radial direction capable of displacement in the drum radial direction.

Regarding the segment displacing means 70 (guide extension/contraction means), the link mechanisms 71 and 72 are both mounted on the same slider 54 (See Figs. 8A and 8B), and the links 71R and 72R are rotated in synchronization using the end portion on the slider 54 side as a fulcrum and expanded and contracted by means of movement of the slider 54 in the drum axial direction. With this, the second guide member 83 and the third guide member 84 slide from a state in which they are overlapped with each other (See Fig. 8A) and displace to the outside in the drum radial direction, respectively, by a predetermined distance each (See Fig. 8B) in conjunction with expansion of each of the links 71R and 72R. At this time, the expansion amount of the link 72R longer than the short link 71R becomes larger, and the guide members 83 and 84 are gradually displaced in accordance with each expansion amount and as a result, the third guide member 84 is displaced at a speed faster than that of the displacing second guide member 83. The extensible guide 81 expands/contracts as above and continuously extends/contracts the segments 60 by a distance according to movement of the slider 54 and stops the segments 60 at an arbitrary position.

As described above, the drum 50 has a moving body formed of the nut 56, the slider 54 and the like and moving in the drum axial direction and the plurality of link mechanisms 71 and 72 and constitutes the guide extension/contraction means by them. Furthermore, the moving body and each of the guide members 83 and 84 to be displaced are connected by the link mechanisms 71 and 72, the links 71R and 72R are expanded and contracted in accordance with movement of the moving body, and the guide members 83 and 84 are expanded/contracted, respectively.

Here, the drum 50 has the pair of sliders 54 which move to or away from each other in synchronization (See Figs. 7A and 7B) and the pair of extensible guides 81 mounted on each of the segments 60, and the sliders 54 and the guide members 83 and 84 are connected by the two link mechanisms 71 and 72 having different expansion/contraction amounts on the both sides of the drum center plane CL. The links 71R and 72R of these link mechanisms 71 and 72 are expanded and contracted in conjunction by movement of the sliders 54, and the connected guide members 83 and 84 are displaced, respectively, so as to extend/contract the pair of extensible guides 81. As a result, on the both sides of the drum center plane CL, the plurality of extensible guides 81 arranged in the drum peripheral direction is radially extended/contracted in synchronization, and the plurality of segments 60 is displaced in the diameter expansion and diameter reduction directions. With this displacement, the drum 50 has the diameter of the outer periphery expanded (See Fig. 7B) and reduced (See Fig. 7A) and also stops the plurality of segments 60 at arbitrary positions in a displaceable range (capable of diameter expansion/reduction) so as to set the outer periphery to a predetermined diameter. In that state, the drum 50 integrally rotates the drum main shaft 52 and the screw shaft 53 and rotates them while maintaining a certain diameter without expanding/reducing the diameters of the segments 60.

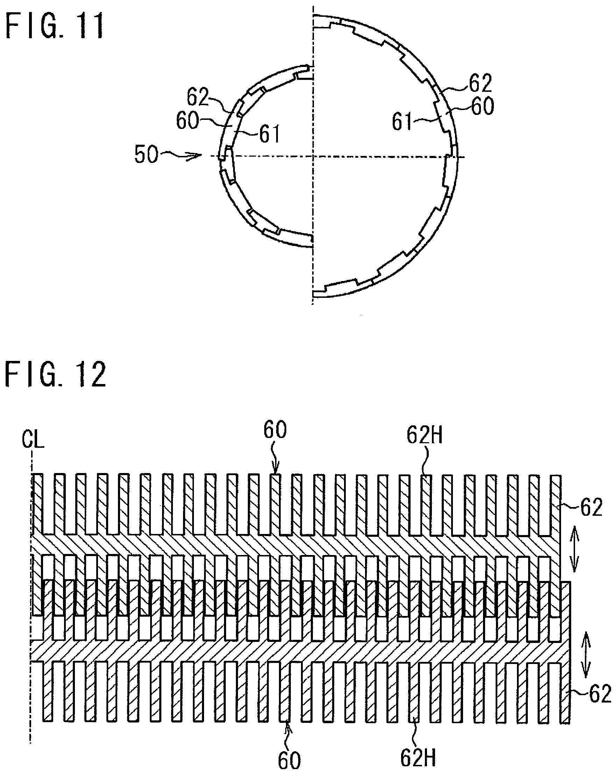

Fig. 11 is a side diagram extracting the plurality of segments 60 from this drum 50 and schematically illustrating them seen from the drum axial direction. Furthermore, in Fig. 11, a state in which the diameter of the drum 50 corresponding to Fig. 7A is reduced is illustrated on the left side and a state in which the diameter of the drum 50 corresponding to Fig. 7B is expanded is illustrated on the right side with respect to the center line between them.

The plurality of segments 60 is, as illustrated in the figure, juxtaposed at equal intervals in the drum peripheral direction, arranged cylindrically as a whole to constitute the drum outer peripheral surface, and arranged at arbitrary positions between the predetermined diameter expanded position (right side in Fig. 11) and the diameter reduced posiiotn (left side in Fig. 11). Here, the plurality of segments 60 has the diameter expansion amount and the diameter reduction amount (displacement amount) adjusted by rotation and stop of the screw shaft 53 in an analog way with no step, and the outer diameter and the length of the outer periphery (length in the drum peripheral direction) are set to predetermined values. In addition, here, the 15 pieces of segments 60 are arranged in the order in the drum peripheral direction to constitute the drum outer periphery. In the second embodiment, each of the segments 60 is formed from a base portion 61 mounted on the third guide member 84 and an integral-type outer peripheral member 62 provided outside in the drum radial direction. The outer peripheral members 62 are members constituting the outer peripheral surface of the drum 50 and provided by projecting from the base portions 61 in the both directions in the drum peripheral direction, and the outer side surfaces in the drum radial direction are formed with a curve having a predetermined radius of curvature in accordance with the outer peripheral surface of the drum 50 having a predetermined diameter.

Fig. 12 is a plan diagram illustrating the outer peripheral members 62 of the segments 60 and schematically illustrates the outer peripheral members 62 of the two segments 60 by viewing the drum 50 from the outer periphery side (upper side in Figs. 8A and 8B). Furthermore, in Fig. 12, different hatchings are given to the outer peripheral members 62 of the segments 60 adjacent in the tire peripheral direction (vertical direction in Fig. 12) so as to indicate one side of the drum center plane CL.

On the outer peripheral members 62, a plurality of projecting members (pectinated members) 62H is provided as illustrated in the figure, and they are arranged by projecting in the drum peripheral direction on the both sides in the drum peripheral direction. Furthermore, the plurality of projecting members 62H is arranged at equal intervals at a predetermined pitch in the longitudinal direction of the segments 60, respectively, and in parallel with each other and separated in the drum width direction (axial direction).

The entire shape of each of the segments 60 is formed in a pectinated shape by the projecting members 62H of the outer peripheral members 62. Furthermore, the segments 60 adjacent in the drum peripheral direction are arranged at positions shifted oppositely in the drum width direction only by a half of the arrangement pitch (a half pitch) of the plurality of projecting members 62H and displaced relatively only by a portion corresponding to one projecting member 62H. That is, regarding the plurality of segments 60, the plurality of projecting members 62H of the segments 60 adjacent in the drum peripheral direction is arranged between each other by shifting the positions in the drum width direction and alternately arranged in the drum width direction. As described above, the plurality of segments 10A and 10B is relatively and sequentially displaced oppositely in the drum width direction, and is alternately arranged sequentially along the drum peripheral direction so as to fill the gap between each of the outer peripheral members and to mesh therewith. Furthermore, regarding the segments 60, the interval between them in the drum peripheral direction is continuously changed with diameter expansion and diameter reduction, and the amount of each projecting member 62H entering between the others is gradually changed and the gaps become larger or smaller.

Meanwhile, on each segment 60, holding means (not shown) which detachably holds the tire constituent member to be wound around the outer periphery during forming of an unvulcanized tire can be provided. Here, the holding means is made up of a magnet embedded on the outer peripheral surface side of the outer peripheral member 62 and reliably holds the tire constituent member on the outer peripheral surface of the drum 50 by adsorbing a steel cord provided on the tire constituent member such as a carcass ply by a magnetic force. Furthermore, the plurality of segments 60 is all formed to be the same including the mounting portions of the pair of third guide members 84 (See Figs. 7A and 7B) and arranged by alternately changing the direction by 180 degrees in the drum peripheral direction and also by sequentially shifting the projecting members 62H in the opposite direction by a half pitch. By constituting the plurality of segments 60 by the same segment as described above, the types of components are not increased but simplified and also, application of a multi-division structure of the drum outer peripheral surface is facilitated while complication of assembling of the segments 60 is avoided.

In the second embodiment, a device for production of a cylindrical tire constituent member, an intermediate body to be formed of an unvulcanized tire or an unvulcanized tire is constituted by this drum 50, the supply means of each tire constituent member, winding means of the tire constituent member and the like. By using the drum 50 provided in this device for production, the diameters of the plurality of segments 60 are expanded or reduced and displaced as described above, the diameter of the drum 50 is expanded or reduced to a predetermined diameter, the tire constituent member is arranged on the outer periphery thereof and formed cylindrically, for example, and the plurality of members is overlapped or the like to manufacture the intermediate body to be formed or the unvulcanized tire. Here, a tire constituent member such as an inner liner, a carcass ply or the like is sequentially wound around the drum 50 to form a cylindrical carcass band.

As described above, the drum 50 in the second embodiment has the plural-stage type extensible guide 81 formed of the plurality of guide members 82, 83, and 84 sequentially connected and capable of extension/contraction, and the segments 60 are guided by the extensible guide 81 telescopically extending/contracting so as to be expanded/contracted. Therefore, the segments 60 can be accurately displaced by the extensible guide 81 and fluctuation of the positions can be suppressed, and the plurality of segments 60 is displaced by the guide mechanism 80 while sufficient accuracy of expansion/contraction is stably ensured, and the outer diameter and the length of the outer periphery of the drum 50 can be set with accuracy. Furthermore, for example, even if the length of the extensible guide 81 when each of the guide members 82, 83, and 84 is contracted down to the most is reduced by shortening the length, the extensible guide 81 can be largely extended in accordance with the number of the guide members 82, 83, and 84 or each displaceable amount and the extended/contracted amount can be increased. As a result, even if the most reduced diameter of the drum 50 is set to be small, the diameter expansion/contraction amount and the diameter expansion/contraction ratio of the drum 50 can be increased by largely expanding/contracting the plurality of segments 60 by the guide mechanism 80 arranged therein.

As a result, the guide mechanism 80 which guides the segments 60 and capable of large expansion/contraction can be arranged in the drum 50 having a relatively small diameter, and the drum 50 can be changed from a state with a diameter smaller than that of prior drum to a state with a large diameter so as to expand the diameter expansion/contraction range, and the length of the outer diameter can be also largely changed. As a result, the drum 50 can be used by largely expanding/reducing the diameter without replacing mechanical components including the segments 60 and by expanding/reducing the diameter of the outer periphery of the one drum 50 in accordance with the switched size of a member to be manufactured or the like, various cylindrical members and unvulcanized tires can be manufactured. Furthermore, the mechanical components for replacement or storage spaces for the components are made unnecessary, whereby a space can be effectively used, and also, manpower required for replacement work or time and labor for that can be reduced, and thus productivity of unvulcanized tires can be drastically improved and a manufacturing cost of a tire can be reduced.

Therefore, according to the second embodiment, the accuracy of expansion/contraction of the segments 60 constituting the outer periphery of the drum 50 can be sufficiently ensured, and the guide mechanism 80 which guides displacement of the segments 60 can be arranged in the drum 50 having a diameter smaller than before. At the same time, since the drum 50 is made usable in a wide diameter expansion/reduction range, productivity of manufacture of unvulcanized tires can be improved. Furthermore, by promoting common the use of the drum 50 and by changing the outer periphery thereof to an arbitrary diameter for use, the manufacture of members and unvulcanized tires having an arbitrary size and many types can be handled without requiring replacement of components or the like, and one-size-fits-all can be realized by covering the whole manufacture range by the one drum 50 in addition to the productivity improvement.

In addition, in this drum 50, the guide members 83 and 84 of the extensible guide 81, which are capable of extension/contraction, are displaced by the above-described guide extension/contraction means, and the segments 60 are expanded/contracted by extending/contracting the extensible guide 81 by each displacement. Therefore, as compared with the case in which the guide mechanism 80 and means which displaces the segments 60 are provided separately, for example, the mechanism or structure of the drum 50 is not complicated but the displacement and guiding of the segments 60 can be performed at the same time through relatively simple mechanism or operation. Furthermore, the segment displacing means 70 is formed of the above-described moving body and the link mechanisms 71 and 72, and the position in the drum radial direction can be accurately positioned by displacing the guide members 83 and 84 with accuracy through relatively simple structure and mechanism, and high diameter expansion/contraction accuracy of the outer peripheral surface can be obtained. Moreover, since the plurality of projecting members 62H of the segments 60 adjacent in the drum peripheral direction is arranged between each other, a large gap is not generated on the outer periphery when the diameter of the drum 50 is expanded but the drum 50 is uniformly brought into contact with the tire constituent member and reliably holds the tire constituent member on the outer peripheral surface, whereby an impression is prevented from being left on the inner surface of the cylindrical member or the unvulcanized tire.

Meanwhile, regarding the extensible guide 81, in order to increase the expansion/contraction distance of the segment 60, the number of the guide members capable of extension/contraction can be set to 3 or more to thereby increase the number of stages to be extended/contracted. Furthermore, the shape of the segment 60 is not limited to the above-described pectinated shape (See Fig. 12). In the second embodiment, the example of a band drum for forming a carcass band has been described above, but the drum 50 of the present invention can be also applied to other drums used for the manufacture of unvulcanized tires such as a belt/tread forming drum which forms a cylindrical member made up of a belt and a tread, a forming drum of an unvulcanized tire in which a part of the outer periphery can be expanded in diameter into a shape having a toroidal section and the like. At this time, the other drums may be a drum which expands/contracts not only the whole outer periphery of the drum but also a part such as the center part, an end part and the like.

Here, this drum 50 can be also applied to a transfer drum which manufactures an unvulcanized tire by transferring the tire constituent member onto the outer surface of the body to be formed as provided in a device for production of an unvulcanized tire in the same way as the drum 1 in the above-described first embodiment. If the drum 50 is to be used as a transfer drum, instead of the drum 1 in the first embodiment in the above-described tire production device 30 (See Figs. 4A, 4B and 5), the drum 50 of the second embodiment is provided in the tire production device 30. Furthermore, by using the drum 50 as a transfer drum in the tire production device 30, the tire constituent member T is transferred onto the body to be formed 40 through the above-described procedures and operations (See Fig. 6) to manufacture an unvulcanized tire. Since the configuration of the tire production device 30 and the manufacturing process of unvulcanized tires are the same as those described in the first embodiment by referring to Figs. 4A, 4B, 5, and 6, the description is omitted here.

By using the drum 50 as a transfer drum, the above-described actions and effects relating to the tire production device 30 can be obtained. However, in this drum 50, unlike the drum 1, by arranging the plurality of projecting members 62H of the segments 60 between each other, the stress acting on the tire constituent member T from the outer peripheral member 62 is finely dispersed. Furthermore, in the drum 50, the sufficient displacement accuracy is ensured in a wide diameter expansion/contraction range to be able to expand/reduce the diameter, and thus the length of the tire constituent member T can be adjusted to a target value with accuracy. Reference Signs List

- 1: tire building drum
- 2: drum main shaft
- 3: screw shaft
- 3A, 3B: male screw portion
- 4A, 4B: slider
- 6A, 6B: nut
- 7A, 7B: plate-shaped member
- 10A, 10B: segment
- 11A, 11B: base portion
- 12A, 12B: outer peripheral member
- 13: holding means
- 20A, 20B: link mechanism
- 21A, 21B: link
- 22A, 22B: support member
- 23: flange
- 24A, 24B: guide member
- 25A, 25B: slide rail
- 30: tire production device
- 31: conveyer
- 32, 33: pulley
- 34: belt
- 35: measuring means
- 40: body to be formed
- 41: rotation driving device
- 42: rotary shaft
- 43: driving device
- 45: controller
- 50: tire building drum
- 52: drum main shaft
- 53: screw shaft
- 53A, 53B: male screw portion
- 54: slider
- 56: nut
- 57: plate-shaped member
- 60: segment
- 61: base portion
- 62: outer peripheral member
- 62H: projecting member
- 70: segment displacing means
- 71, 72: link mechanism
- 71R, 72R: link
- 80: guide mechanism
- 81: extensible guide
- 82, 83, 84: guide member
- 82K, 83K: engagement member
- 83R, 84R: slide rail
- 83H: connection piece
- 83J: through-hole
- CL: drum center plane
- T: tire constituent member.

## Claims

1. A tire building drum (50) for use for manufacture of an unvulcanized tire and in which at least a part of the outer periphery is capable of being expanded and reduced in diameter, comprising:
a plurality of segments (60) sequentially arranged in the drum peripheral direction and capable of being expanded/contracted and segment displacing means (70) for expanding/contracting the plurality of segments (60), wherein
the segment displacing means (70) has a plural-stage type extensible guide (81) to which each segment (60) is mounted and which is formed of a plurality of guide members (83,84) sequentially connected and capable of extension/contraction in the segment displacement direction so as to guide the segments (60) by the extending/contracting extensible guide (81) and to extend/contract the same,
wherein
the segment displacing means (70) has guide extension/contraction means for extending/contracting the extensible guide (81) by displacing the guide member capable of expansion/contraction of the extensible guide (81), and for expanding/contracting the segments (60) by expanding/contracting the extensible guide (81), and
wherein
the guide extension/contraction means has a moving body (54) which is movable in the drum axial direction and a link mechanism (71, 72) which connects the moving body (54) and each guide member (83,84) to be displaced and configured to perform expansion/contraction in accordance with movement of the moving body (54), to thereby extend/contract each guide member (83, 84).

2. The tire building drum (50) according to claim 1, wherein
the plurality of guide members has a first guide member (82) whose position in the drum radial direction is fixed, a second guide member (83) connected to the first guide member (82) and capable of displacement in the drum radial direction, and a third guide member (84) connected to the second guide member (83) and capable of displacement in the drum radial direction, and to which the segment (60) is mounted.

3. A device for production of an unvulcanized tire, comprising the tire building drum (50) described in claim 1 or 2.

4. The device for production of an unvulcanized tire according to claim 3, for manufacturing an unvulcanized tire by transferring a tire constituent member (T) arranged on the outer periphery of a transfer drum to a body to be formed, in which
the transfer drum is the tire building drum (50), capable of holding the tire constituent member (T) on the outer periphery and expanding/reducing the diameter, comprising:
a measuring means (35) for measuring the length of the tire constituent member (T) held by the transfer drum, in the drum peripheral direction;
means for comparing a measured value of the length measured by the measuring means (35) and a target value of the length set in advance; and
means for adjusting the length of the tire constituent member (T) held by the transfer drum by expanding or reducing the diameter of the transfer drum based on the comparison result of the lengths.

5. A method for production of an unvulcanized tire by using the tire building drum (50) according to claim 1 or 2, comprising the step of:
expanding or reducing the diameter of the tire building drum (50) by expanding or reducing in diameter the plurality of segments (60).

6. A method for production of an unvulcanized tire by transferring a tire constituent member (T) arranged on the outer periphery of a transfer drum to a body to be formed, in which the transfer drum is the tire building drum (50) according to claim 1 or 2, comprising the steps of:
holding the tire constituent member (T) on the outer periphery of the transfer drum;
measuring the length of the tire constituent member (T) held by the transfer drum in the drum peripheral direction;
comparing the measured value of the length and the target value of the length set in advance; and
adjusting the length of the tire constituent member (T) held by the transfer drum by expanding or reducing the diameter of the transfer drum based on the comparison result of the lengths.

## Patentansprüche

1. Reifenaufbautrommel (50) zur Verwendung zur Fertigung eines nicht-vulkanisierten Reifens und wobei wenigstens ein Teil des Außenumfangs dazu in der Lage ist, im Durchmesser ausgedehnt und verringert zu werden, die Folgendes umfasst:
mehrere Segmente (60), die der Reihe nach in der Trommelumfangsrichtung angeordnet und dazu in der Lage sind, ausgedehnt/zusammengezogen zu werden, und ein Segmentverschiebungsmittel (70) zum Ausdehnen/Zusammenziehen der mehreren Segmente (60), wobei
das Segmentverschiebungsmittel (70) eine ausfahrbare Führung (81) vom Mehrstufentyp hat, an der jedes Segment (60) angebracht ist und die von mehreren Führungselementen (83, 84) gebildet wird, die der Reihe nach verbunden und zum Ausfahren/Zusammenziehen in der Segmentverschiebungsrichtung in der Lage sind, um so die Segmente (60) durch die sich ausfahrende/zusammenziehende ausfahrbare Führung (81) zu führen und dieselben auszufahren/zusammenzuziehen,
wobei
das Segmentverschiebungsmittel (70) ein Führungsausfahr-/-zusammenziehmittel zum Ausfahren/Zusammenziehen der ausfahrbaren Führung (81) durch ein Verschieben des zum Ausdehnen/Zusammenziehen der ausfahrbaren Führung (81) fähigen Führungselements und zum Ausdehnen/Zusammenziehen der Segmente (60) durch das Ausdehnen/Zusammenziehen der ausfahrbaren Führung (81) hat, und
wobei
das Führungsausfahr-/-zusammenziehmittel einen sich bewegenden Körper (54), der in der Trommelaxialrichtung beweglich ist, und einen Verknüpfungsmechanismus (71, 72), der den sich bewegenden Körper (54) und jedes Führungselement (83, 84), das zu verschieben und dafür konfiguriert ist, ein Ausdehnen/Zusammenziehen entsprechend einer Bewegung des sich bewegenden Körpers (54) auszuführen, verbindet, um dadurch jedes Führungselement (83, 84) auszufahren/zusammenzuziehen, hat.

2. Reifenaufbautrommel (50) nach Anspruch 1, wobei
die mehreren Führungselemente ein erstes Führungselement (82), dessen Position in der Trommelradialrichtung fixiert ist, ein zweites Führungselement (83), das mit dem ersten Führungselement (82) verbunden und zu einer Verschiebung in der Trommelradialrichtung in der Lage ist, und ein drittes Führungselement (84), das mit dem zweiten Führungselement (83) verbunden und zu einer Verschiebung in der Trommelradialrichtung in der Lage ist und an dem das Segment (60) angebracht ist, haben.

3. Vorrichtung zur Herstellung eines nicht-vulkanisierten Reifens, welche die Reifenaufbautrommel (50) nach Anspruch 1 oder 2 umfasst.

4. Vorrichtung zur Herstellung eines nicht-vulkanisierten Reifens nach Anspruch 3, zur Fertigung eines nicht-vulkanisierten Reifens durch das Übertragen eines Reifenbestandteilelements (T), das auf dem Außenumfang einer Übertragungstrommel angeordnet ist, auf einen zu formenden Körper, wobei
die Übertragungstrommel die Reifenaufbautrommel (50) ist, die dazu in der Lage ist, das Reifenbestandteilelement (T) auf dem Außenumfang zu halten und den Durchmesser auszudehnen/zu verringern, umfassend:
ein Messmittel (35) zum Messen der Länge des durch die Übertragungstrommel gehaltenen Reifenbestandteilelements (T) in der Trommelumfangsrichtung,
ein Mittel zum Vergleichen eines gemessenen Wertes der durch das Messmittel (35) gemessenen Länge und eines im Voraus festgesetzten Zielwertes der Länge und
ein Mittel zum Einstellen der Länge des durch die Übertragungstrommel gehaltenen Reifenbestandteilelements (T) durch das Ausdehnen oder Verringern des Durchmessers der Übertragungstrommel auf der Grundlage des Vergleichsergebnisses der Längen.

5. Verfahren zur Herstellung eines nicht-vulkanisierten Reifens durch Verwendung der Reifenaufbautrommel (50) nach Anspruch 1 oder 2, das den folgenden Schritt umfasst:
das Ausdehnen oder Verringern des Durchmessers der Reifenaufbautrommel (50) durch das Ausdehnen oder Verringern der mehreren Segmente (60) im Durchmesser.

6. Verfahren zur Herstellung eines nicht-vulkanisierten Reifens durch das Übertragen eines Reifenbestandteilelements (T), das auf dem Außenumfang einer Übertragungstrommel angeordnet ist, auf einen zu formenden Körper, wobei die Übertragungstrommel die Reifenaufbautrommel (50) nach Anspruch 1 oder 2 ist, das die folgenden Schritte umfasst:
das Halten des Reifenbestandteilelements (T) auf dem Außenumfang der Übertragungstrommel,
das Messen der Länge des durch die Übertragungstrommel gehaltenen Reifenbestandteilelements (T) in der Trommelumfangsrichtung,
das Vergleichen des gemessenen Wertes der Länge und des im Voraus festgesetzten Zielwertes der Länge und
das Einstellen der Länge des durch die Übertragungstrommel gehaltenen Reifenbestandteilelements (T) durch das Ausdehnen oder Verringern des Durchmessers der Übertragungstrommel auf der Grundlage des Vergleichsergebnisses der Längen.

## Revendications

1. Tambour de fabrication de pneu (50), destiné à la réalisation d'un pneu non vulcanisé, et dont au moins une partie de la périphérie extérieure est apte à subir une augmentation et une réduction de diamètre, comprenant :
une pluralité de segments (60) agencés séquentiellement dans le sens périphérique du tambour et aptes à subir une expansion/rétraction, et un moyen de déplacement de segments (70) permettant l'expansion/rétraction de la pluralité de segments (60), dans lequel
le moyen de déplacement de segments (70) possède un guide extensible du type à plusieurs étages (81) sur lequel est monté chaque segment (60) et qui est constitué d'une pluralité d'éléments de guidage (83, 84) reliés séquentiellement et aptes à subir une expansion/rétraction dans le sens de déplacement des segments de manière à guider les segments (60) sous l'effet de l'expansion/rétraction du guide extensible (81) et à entraîner une expansion/rétraction de ces derniers,
dans lequel
le moyen de déplacement de segments (70) possède un moyen d'expansion/rétraction de guide permettant l'expansion/rétraction du guide extensible (81) par déplacement de l'élément de guidage apte à entraîner l'expansion/rétraction du guide extensible (81), et permettant l'expansion/rétraction des segments (60) sous l'effet de l'expansion/rétraction du guide extensible (81), et
dans lequel
le moyen d'expansion/rétraction de guide possède un corps mobile (54) qui est mobile dans le sens axial du tambour et un mécanisme de biellette (71, 72) qui relie le corps mobile (54) et chaque élément de guidage (83, 84) à déplacer et est configuré pour effectuer la dilatation/rétraction selon le déplacement du corps mobile (54), pour ainsi entraîner l'expansion/rétraction de chaque élément de guidage (83, 84).

2. Tambour de fabrication de pneu (50) selon la revendication 1, dans lequel
la pluralité d'éléments de guidage possède un premier élément de guidage (82) dont la position dans le sens radial du tambour est fixe, un deuxième élément de guidage (83) relié au premier élément de guidage (82) et apte à être déplacé dans le sens radial du tambour, et un troisième élément de guidage (84) relié au deuxième élément de guidage (83) et apte à être déplacé dans le sens radial du tambour, et sur lequel est monté le segment (60).

3. Dispositif de production d'un pneu non vulcanisé, comprenant le tambour de fabrication de pneu (50) décrit dans la revendication 1 ou 2.

4. Dispositif de production d'un pneu non vulcanisé selon la revendication 3, pour la réalisation d'un pneu non vulcanisé par transfert d'un élément constitutif de pneu (T) agencé sur la périphérie extérieure d'un tambour de transfert vers un corps destiné à être formé, dans lequel
le tambour de transfert est le tambour de fabrication de pneu (50), apte à supporter l'élément constitutif de pneu (T) sur la périphérie extérieure et à augmenter/réduire le diamètre, comprenant :
un moyen de mesure (35) destiné à mesurer la longueur de l'élément constitutif de pneu (T) supporté par le tambour de transfert, dans le sens périphérique du tambour ;
un moyen de comparaison d'une valeur de la longueur mesurée par le moyen de mesure (35) et d'une valeur cible prédéterminée de la longueur ; et
un moyen de réglage de la longueur de l'élément constitutif de pneu (T) supporté par le tambour de transfert par augmentation ou réduction du diamètre du tambour de transfert en fonction du résultat comparatif des longueurs.

5. Procédé de production d'un pneu non vulcanisé au moyen du tambour de fabrication de pneu (50) selon la revendication 1 ou 2, comprenant l'étape consistant à :
augmenter ou réduire le diamètre du tambour de fabrication de pneu (50) en augmentant ou en réduisant le diamètre de la pluralité de segments (60).

6. Procédé de production d'un pneu non vulcanisé par transfert d'un élément constitutif de pneu (T) agencé sur la périphérie extérieure d'un tambour de transfert vers un corps destiné à être formé, dans lequel le tambour de transfert est le tambour de fabrication de pneu (50) selon la revendication 1 ou 2, comprenant les étapes consistant à :
supporter l'élément constitutif de pneu (T) sur la périphérie extérieure du tambour de transfert ;
mesurer la longueur de l'élément constitutif de pneu (T) supporté par le tambour de transfert dans le sens périphérique du tambour ;
comparer la valeur mesurée de la longueur et la valeur cible prédéterminée de la longueur ; et
régler la longueur de l'élément constitutif de pneu (T) supporté par le tambour de transfert en augmentant ou réduisant le diamètre du tambour de transfert en fonction du résultat comparatif des longueurs.
